# EUROPEAN PATENT SPECIFICATION

(11) **EP 3 357 802 B1**
(45) Date of publication and mention of the grant of the patent: **01.09.2021**
(21) Application number: 17425014.2
(22) Date of filing: 07.02.2017
(51) Int. Cl.: B62H 5/10, B62H 5/08, B62M 3/00

(54) **LOCKING AND ANTI-THEFT DEVICE FOR A BICYCLE AND BICYCLE COMPRISING SAID DEVICE**
DIEBSTAHLSICHERE VERSCHLUSSVORRICHTUNG FÜR EIN FAHRRAD UND FAHRRAD MIT DER VORRICHTUNG
DISPOSITIF DE FERMETURE ANTIVOL POUR BICYCLETTE ET BICYCLETTE COMPRENANT LEDIT DISPOSITIF

(43) Date of publication of application: 08.08.2018
(73) Proprietor: Key Innovation S.r.l., 20145 Milano (IT)
(72) Inventor: Ripamonte, Cosimo Mauro, I-20145 Milano (IT)
(74) Representative: Leihkauf, Steffen Falk

(56) References cited:
- DE-A1- 19 753 024
- DE-C- 490 863
- US-A- 839 584
- US-A- 1 859 130

## Description

### Field of application

The present invention relates to an anti-theft closure and immobilization device for a bicycle.

### State of the art

Various anti-theft devices for a bicycle are known, and in particular able to lock the rotation of the pedal sprocket when the bicycle is left unattended in a public place.

In particular, devices are also known which remain hidden within the bicycle frame.

Such known devices, however, are generally bulky and structurally complex in addition to being integrated into the structure of the bicycle, which must be specifically designed so as to have inner spaces configured to accommodate and allow the operation thereof.

For example, US 839 584 A, which shows the features of the preamble of claim 1, discloses a bicycle-lock which forms a permanent fixture of the bicycle completely out of sight and arranged to lock the running-gear of the bicycle to prevent unauthorized persons from riding away with the bicycle.

Such known anti-theft devices, adapted to be hidden within the structure of the bicycle, have therefore the disadvantage of being dedicated to specific geometries of the inner spaces of the bicycle frame, negatively affecting the overall production and sale costs.

The need to provide an anti-theft closure and immobilization device for a bicycle, adapted to be mounted within the bicycle frame avoiding the need for a specific design of the frame itself, is therefore strongly felt.

### Summary of the invention

It is an object of the present invention to devise and make available an anti-theft closure and immobilization device for a bicycle which allows to satisfy the aforementioned requirements and to obviate at least partially the drawbacks complained here above with reference to the prior art.

In particular, it is a task of the present invention to make available an anti-theft closure and immobilization device for a bicycle adapted to be mounted within the bicycle frame avoiding the need for a specific design of the frame itself.

Furthermore, it is an object of the present invention to provide an anti-theft closure and immobilization device for a bicycle adapted to be mounted within the bicycle frame in a manner completely hidden from view.

It is another object of the present invention to provide an anti-theft closure and immobilization device for a bicycle adapted to be mounted within the bicycle frame, in which such device is structurally robust and reliable.

These and further objects and advantages are achieved by means of an anti-theft closure and immobilization device for a bicycle and a bicycle in accordance with the independent claims.

Further objects, solutions and advantages are shown in the embodiments described below, and claimed in the dependent claims.

According to a general embodiment of the invention, the provision for accommodating the shaft coaxially to, and inside of, an outer sleeve which is mountable within a seat for a sprocket of a bicycle frame, and the provision for accommodating the entire locking mechanism within the sleeve, and the provision for the mechanism to comprise a movable engagement element adapted to engage with a sleeve recess, allows to make the shape and the operation of the closure device completely separate and independent from the shape of the bicycle frame, thus making the device mountable to any bicycle frame, also already existing, without modifying the frame.

The aforesaid closure and immobilization device is thus presented, in an assembled manner, as a stand-alone assembly, compact, complete and universal, mountable to any bicycle frame which has a frame seat for a pedal sprocket. It is sufficient that the outer sleeve has an outer size such to be housed within the frame seat for a pedal sprocket.

Frames of many different bicycle models are frequently made so as to comprise a pedal sprocket seat of a size substantially equal one another. This allows to mount the same closure device according to claim 1 to all bicycle models having a substantially equal pedal sprocket seat, independently of any other size and type of frame.

Among other things, the closure and immobilization device according to claim 1 allows the mounting thereof to any already existing bicycle, by means of simple mounting operations, avoiding to carry out any modification of the frame.

According to the invention, the closure and immobilization device comprises a first sleeve element comprising said sleeve engagement recess, and a second sleeve element associable with one another when approaching each other to form the outer sleeve, wherein the first sleeve element comprises a first outer fastening portion adapted to be fastened to the bicycle frame, and/or wherein the second sleeve element comprises a second outer fastening portion adapted to be fastened to the bicycle frame.

The bicycle frames known generally comprise a pedal sprocket seat having inner seat threads to allow the fastening of a known pedal sprocket therewithin.

The closure device having the aforesaid first outer fastening portion and/or the second outer fastening portion, allows the mounting of the device according to the aforesaid advantageous embodiment to the known frame by simply mounting the new device according to the invention in place of the known pedal sprocket, using the same inner pedal sprocket seat already present in the bicycle frame.

### Brief description of the drawings

The invention will be illustrated below with the description of some embodiments thereof, given by way of explanation and not by way of limitation, with reference to the accompanying drawings wherein:

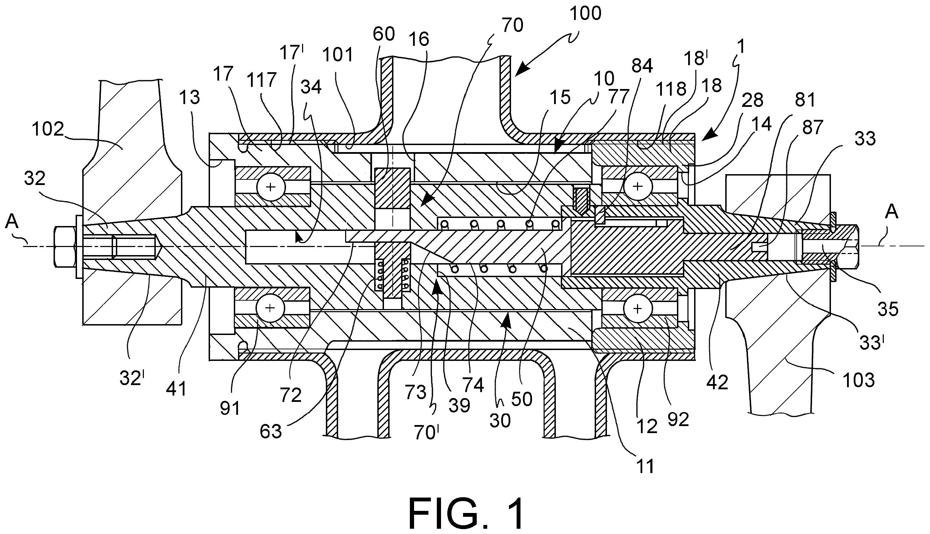

- Figure 1 shows a closure and immobilization device according to the present invention mounted in a pedal sprocket seat of a bicycle frame, in a longitudinal section view by means of a section plane passing through the rotation axis of the shaft of the closure and immobilization device;
- Figure 2 shows a longitudinal sectional view of the closure and immobilization device of Figure 1, wherein the engagement element is in a protruding position and engaged in the engagement recess, preventing the relevant rotation of the shaft with respect to the outer sleeve;
- Figure 3 shows a longitudinal sectional view of the closure and immobilization device of Figure 1, wherein the engagement element is in a non-protruding position and retracted so as to be disengaged from the sleeve recess allowing the free rotation of the shaft with respect to the sleeve;
- Figure 4 shows a side view of a shaft of the closure and immobilization device of Figure 1;
- Figure 5 shows a longitudinal sectional view of the shaft of the closure and immobilization device of Figure 4;
- Figure 6 shows a longitudinal sectional view of a first sleeve element of the closure and immobilization device of Figure 1;
- Figure 7 shows a perspective view of an example of engagement element of the closure and immobilization device of Figure 1;
- Figure 8 shows a perspective view of an example of stem of the closure and immobilization device of Figure 1;
- Figure 9 shows an example of actuation device of the closure and immobilization device of Figure 1.

### Description of the preferred embodiments

With reference to the figures, an anti-theft closure and immobilization device for a bicycle according to the invention is generally indicated with reference numeral 1.

The anti-theft closure and immobilization device 1 for a bicycle comprising an outer sleeve 10 defining a sleeve axis M-M, opposite sleeve end openings 13, 14, a sleeve inner surface 15, a sleeve engagement recess 16 extending from said sleeve inner surface 15 towards the outside of the outer sleeve 10.

According to an embodiment, the outer sleeve 10 has a substantially tubular shape, for example a cylindrical tubular shape.

According to an embodiment, the sleeve engagement recess 16 transversely extends with respect to the sleeve axis M-M, for example, it is orthogonal to the sleeve axis M-M.

Preferably, the sleeve engagement recess 16 is a hole, for example a blind hole or a through hole.

The closure device 1 comprises a shaft 30 defining a rotation axis A-A and a shaft outer surface 31, preferably a lateral shaft outer surface 31.

The shaft 30 is arranged coaxially to and inside of the outer sleeve 10 so as to rotate with respect to the outer sleeve 10 about the rotation axis A-A.

The shaft 30 has a first free shaft end 32 and a second free shaft end 33 accessible from opposite sleeve end openings 13, 14.

The shaft 30 has a second free end opening 35 and an inner cavity 34 extending along the rotation axis A-A from the second free end opening 35 towards the first free shaft end 32.

The inner cavity 34 defines a cavity side surface 36.

According to an embodiment, the inner cavity 34 is a hole coaxial to the rotation axis A-A, and is preferably a blind hole.

According to an embodiment, the shaft 30 has a substantially cylindrical shape.

The shaft 30 has an through engagement-hole 37 extending between the cavity side surface 36 and the shaft outer surface 31, preferably the shaft outer side surface 31, along an engagement hole axis F-F.

According to an embodiment, the engagement hole axis F-F is inclined with respect to the rotation axis A-A, for example transverse to the rotation axis A-A, for example orthogonal to the rotation axis A-A.

The closure device 1 further comprises a locking mechanism 70 arranged inside the inner cavity 34 and actuatable by means of the second free end opening 35.

The locking mechanism 70 comprises a shaft engagement element 60 slidably engaged in the engagement hole 37 between a protruding position with respect to the lateral shaft outer surface 31, and a non-protruding position with respect to the lateral shaft outer surface 31.

The sleeve engagement recess 16 and the shaft engagement element 60 are mutually positioned so as to align, at a predetermined angular position of the shaft 30 with respect to the outer sleeve 10, the shaft engagement element 60 with the sleeve engagement recess 16, so that the shaft engagement element 60 may be at least partially received, in protruding position, in said sleeve engagement recess 16 preventing any further movement of the shaft 30 with respect to the outer sleeve 10.

According to an embodiment, the locking mechanism 70 comprises a stem 50 housed inside the inner cavity 34 and movable between a retracted position and an advanced position.

Preferably, the stem 50 comprises an elongated body coaxially and slidably housed in the inner cavity 34 along the rotation axis A-A.

The locking mechanism 70 further comprises motion transmitting means 70' between the stem 50 and the shaft engagement element 60 arranged within the inner cavity 34 and configured so that a movement of the stem 50 between the retracted position and the advanced position corresponds to a movement of the shaft engagement element 60 between the protruding position and the non-protruding position.

According to an embodiment, the motion transmitting means 70' comprise a cam-follower device 71.

According to one embodiment, the cam-follower device 71 comprises a cam profile 72, 73, 74 of the stem, a follower profile 61 of the shaft engagement element 60 adapted to be pushed in sliding contact against the cam profile 72, 73, 74, and elastic thrust means 63 adapted to push the follower profile 61 against the cam profile 72, 73, 74.

According to an embodiment, the cam profile 72, 73, 74 comprises a first profile portion 72, for example rectilinear, parallel to the rotation axis A-A and arranged at a first distance therefrom, a third profile portion 74, for example rectilinear, parallel to the rotation axis A-A and arranged at a second distance therefrom, a second profile portion 73, interposed between the first profile portion 72 and the third profile portion 74 and inclined with respect thereto.

According to an embodiment, the second profile portion 73 is rectilinear.

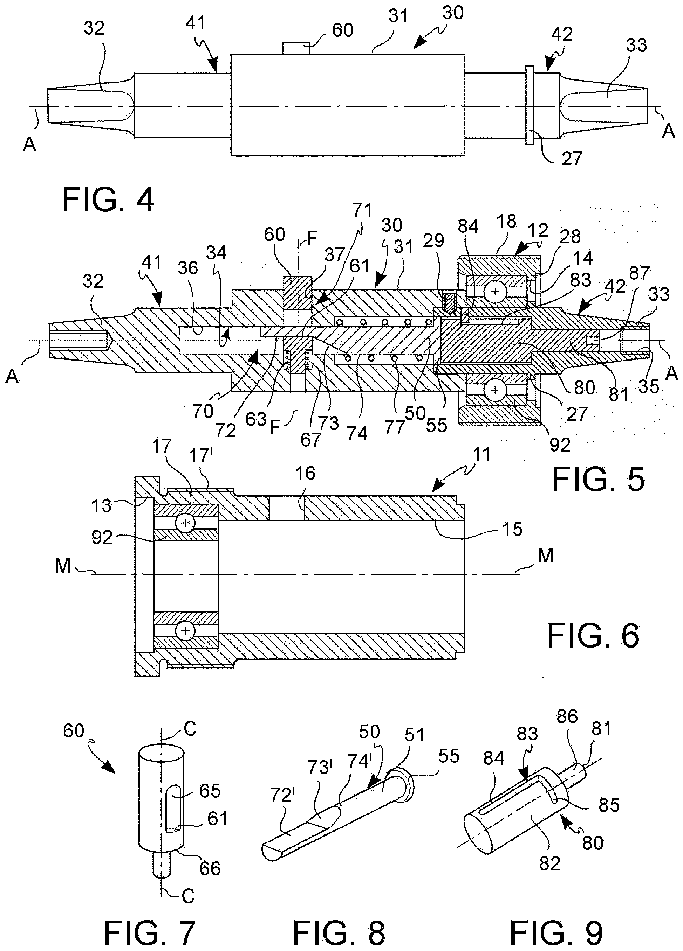

According to an embodiment, the stem 50, of which Figure 8 shows an embodiment, comprises an elongated body 51, for example cylindrical, comprising the cam profile 72, 73, 74.

According to an embodiment the cam profile 72, 73, 74 belongs to a cam surface 72', 73', 74' of the stem 50, wherein the cam profile 72, 73, 74 is the intersection of the cam surface 72', 73', 74' with a sectional plane passing through the rotation axis A-A.

According to an embodiment, the cam surface 72', 73', 74' comprises a surface portion 72' comprising the first profile portion 72. For example, the first surface portion is flat and orthogonal to the engagement hole axis F-F.

According to an embodiment, the cam surface 72', 73', 74' comprises a third surface portion 74" comprising the third profile portion 74. For example, the third surface portion 74' is flat and orthogonal to the engagement hole axis, or the third surface portion 74' is substantially cylindrical and belonging to the outer surface of the stem 50 or of the elongated body 51.

According to an embodiment, the cam surface 72', 73', 74' comprises a second surface portion 73" comprising the second profile portion 73. For example, the second surface portion 73' is flat and inclined with respect to the engagement hole axis F-F and to the rotation axis A-A.

According to an embodiment, the shaft engagement element, of which Figure 7 shows an embodiment, is an elongated body defining a main engagement element development axis C-C.

Operatively, the shaft engagement element 60 is slidably arranged within the engagement hole 37 so that the main development axis C-C of the engagement element is arranged along the engagement hole axis F-F.

According to an embodiment, the follower profile 61 belongs to a follower surface belonging to an inner side surface of a slot 65 crossing the shaft engagement element 60, preferably said slot being a slot passing through the shaft engagement element 60, preferably transversely to the main development direction C-C of the shaft engagement element 60, preferably orthogonally to the main development direction C-C of the shaft engagement element 60.

According to an embodiment, the elastic thrust means 63 comprise a compression spring acting along the engagement hole axis F-F between the shaft engagement element 60 and the shaft 30, for example between a shoulder 66 made on an outer side surface of the shaft engagement element 60 and the cavity side surface 36, for example between a shoulder 66 made on an outer side surface of the shaft engagement element 60 and a flaring 67 made along the engagement hole axis F-F in the shaft 30 from the cavity side surface 36.

According to an embodiment, the locking mechanism 70 comprises elastic return means 77 adapted to act on the stem 50 to bring it back to a rest position, for example at the protruding position of the shaft engagement element 60.

According to an embodiment, the elastic return means 77 comprise a compression spring acting on the stem 50 along the rotation axis A-A.

According to an embodiment, the compression spring is interposed between a stem collar 55 laterally protruding from the stem 50 and a shoulder 39 in the inner cavity 34.

According to an embodiment, the closure device 1 comprises an actuation device 80 mounted inside said cavity 34 and adapted to actuate the locking mechanism 70.

In particular, the actuation device 80 is configured to act on the locking mechanism 70 to move the shaft engagement element 60 between the protruding position and the non-protruding position and hold it in one of these positions.

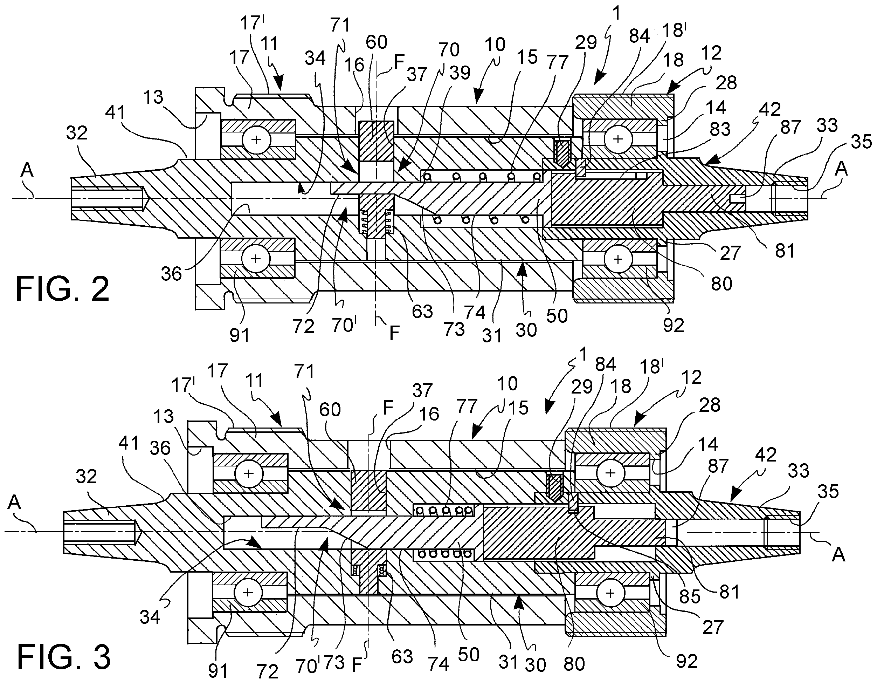

According to an advantageous embodiment, the actuation device 80 is configured to act on the locking mechanism 70 to move the shaft engagement element 60 from the protruding position (Figure 2) to the non-protruding position (Figure 3) and hold it the non-protruding position.

According to an embodiment, the actuation device comprises a movable body 82 arranged within the cavity 34 and a guided movement device rotating with respect to the shaft 30 to rotate about the rotation axis A-A and to slide along the rotation axis A-A.

According to an embodiment, the guided movement device comprises a pin 84 fastened to the shaft 30 in a protruding manner in said cavity 34 from the cavity side surface 36, and a guide channel 83 made on an outer side surface of the movable body 82, adapted to be slidably crossed by said pin 84 to guide the movement of the movable body 82 with respect to the shaft 30.

According to an embodiment, shown by way of example in Figure 9, the guide channel 83 comprises a portion parallel to the rotation axis A-A and a circumferential portion 85 arranged circumferentially with respect to the rotation axis A-A.

According to one embodiment, the actuation device 80 comprises a lock for a key 81 accessible from the second free end opening 35.

According to an embodiment, the lock for a key 81 may comprise a cavity/protrusion 87 made at a free end 86 of the actuation device 80, as shown by way of example in figures 2, 3, 9, facing towards the outside through, or at, the second free end opening 35. In this case, to act on the actuation device 80 and move it so as to move the shaft engagement element 60 is sufficient to insert, through the second free end opening 35, a key shaped to couple with the cavity/protrusion 87 and move such key accordingly.

The lock for a key 81 can alternatively comprise a lock unit, not shown in the figures, mechanically coupled with the actuation device 80, adapted to receive a key having a complex shape.

Such lock unit is preferably mounted inside the inner cavity 34 and accessible through of the second free end opening 35.

According to an embodiment, the shaft 30 comprises a first shaft element 41 comprising the first free shaft end 32 and the engagement hole 37 of the shaft 30, and a second shaft element 42 comprising the second shaft end 33, said second shaft element 42 being fastenable to said first shaft element 41.

According to an embodiment, the inner cavity 36 crosses entirely the second shaft element 42 and partially the first shaft element 41.

According to an embodiment, the shaft 30 comprises fastening means to fasten the first shaft element 41 and the second shaft element 42 each other, for example, such fastening means are removable fastening means, for example comprising a screw, or a grub screw, 29.

Alternatively, the fastening means are non-removable fastening means (not shown), for example a welded or glued junction.

According to an embodiment, the second shaft element 42 comprises an axial securing element 27, integral with the second shaft element 42 and configured to prevent the axial sliding of the second outer sleeve element 12 with respect to the shaft 30 when moving away from the first free shaft end 32 of the rotating shaft.

According to an embodiment, the axial securing element 27 is an annular protrusion of the second shaft element 42 coaxial to the shaft 30.

According to an embodiment, the axial securing element 27 is arranged so as to receive in abutment the second bearing 92 and prevent the sliding of the second bearing 92 beyond the axial securing element 27 when moving away from the first free shaft end 32.

According to an embodiment, the second bearing 92 is mounted integral with said second outer sleeve element 12.

For example, the second bearing 92 is shrink-fitted in said second outer sleeve element 12.

For example, the second outer sleeve element 12 comprises an abutment portion 28 arranged to prevent the axial sliding of the second bearing 92 with respect to the second outer sleeve element 12 when moving away from the first free shaft end 32.

Thus, the second sleeve element 12 may not be disassembled by the first outer sleeve element 11 if first the engagement element 60 is not brought in the non-protruding position, as the second outer sleeve element 12 cannot be pulled from the shaft 30 when moving away from the first free end 32, as it is stopped by the axial securing element 27.

According to an embodiment, the outer sleeve 10 comprises a first sleeve element 11 comprising said sleeve engagement recess 16 and a second sleeve element 12 associable when approaching one another to form the outer sleeve 10.

According to an embodiment, the closure device 1 comprises a first bearing 91 interposed between the first sleeve element 11 and the shaft 30, and a second bearing 92 interposed between the second sleeve element 12 and the shaft 30.

According to an embodiment, the first sleeve element 11 comprises a first fastening portion 17, and/or the second sleeve element 12 comprises a second fastening portion 18.

According to an embodiment, the first fastening portion 17 comprises a first outer thread 17' coaxial to the rotation axis A-A, and/or the second fastening portion 17 comprises a second outer thread 18' coaxial to the rotation axis A-A.

According to an embodiment, the first fastening portion 17 and the second fastening portion 18 are configured to be fastened inside a pedal sprocket seat 101 of a bicycle frame 100 and the first free shaft end 32 comprises a first pedal supporting portion 32' to engage and removably support a first pedal 102, and the second free shaft end 33 comprises a second pedal supporting portion 33' to engage and removably support a second pedal 103.

Thus, the closure device 1 is a bicycle pedal sprocket able to lock the rotation of the pedals to immobilize the bicycle.

This embodiment allows to hide the closure device 1 inside the pedal sprocket seat of the bicycle frame.

According to another embodiment of the closure device 1 described above, the first fastening portion 17 and the second fastening portion 18 are configured to be fastened inside a bicycle wheel hub seat and in which the first free shaft end 32 comprises a first removable portion for mounting to a bicycle wheel fork, and the second free shaft end 33 comprises a second removable portion for mounting to a bicycle wheel fork.

Wheel hub seat means an axial seat in the bicycle wheel, adapted to receive a hub mounted to the bicycle frame. In particular, this embodiment allows to hide the closure device 1 described above inside the wheel hub seat.

In other words, the closure device 1 according to this embodiment is a hub for a bicycle wheel able to lock the rotation of the wheel with respect to the fork so as to immobilize the bicycle.

According to another aspect of the present invention, the aforesaid and other objects and advantages are satisfied by a bicycle comprising a bicycle frame 100 having a portion of frame comprising a pedal sprocket seat 101, a first pedal 102 and a second pedal 103, an anti-theft closure and immobilization device for a bicycle 1 as described above, wherein the outer sleeve 10 is housed inside, and fastened to, the pedal sprocket seat 101, and wherein the first pedal 102 is fastened, preferably in a removable manner, to the first free shaft end 32 and the second pedal 103 is fastened, preferably in a removable manner, to the second free shaft end 33.

According to an embodiment, the pedal sprocket seat 101 is substantially cylindrical and comprises a first and a second inner threads adapted to couple with the first outer thread 17' and with the second outer thread 18', respectively.

According to a further aspect of the present invention, the aforesaid other objects and advantages are satisfied by a bicycle comprising a bicycle frame 100 having at least one wheel supporting fork, at least one wheel having a wheel hub having a wheel hub seat, an anti-theft closure and immobilization device for a bicycle 1 as described above wherein the outer sleeve is housed inside, and fastened to said hub seat, in which the wheel supporting fork is fastened, preferably in a removable manner, to the first free shaft end 32 and to the second free shaft end 33.

According to an embodiment, the hub seat is substantially cylindrical and comprises a first and a second inner thread adapted to pair with the first outer thread 17' and with the second outer thread 18', respectively.

Advantageously, the closure device described above allows to be mounted in a pedal sprocket seat of a bicycle, in particular, also an already existing bicycle, without altering or modifying in any way the structure of the bicycle itself.

It is thus sufficient to disassemble the conventional pedal sprocket, and mount in its place the closure device according to the present invention.

This advantage is obtained thanks to the fact that the entire closure device according to the present invention is presented as an independent unit, which externally has the same size of a traditional pedal sprocket.

The lock is hidden inside the device and is accessible by a free end opening. This allows to hide the lock itself from prying eyes of a thief.

Furthermore, the closure device described above is extremely robust as it is protected within the bicycle sprocket seat, preventing the introduction of tamper tools.

In case the engagement hole axis F-F is transverse, or orthogonal, with respect to the rotation axis A-A, when the shaft engagement element 60 is in the protruding position, and therefore engaged inside the sleeve engagement recess 16, it prevents disassembling the first sleeve element 11 and the second sleeve element 12 each other, as the second sleeve element 12 is secured along the rotation axis to the shaft 30 by means of the second bearing 92, and also the first sleeve element 11 is secured along the rotation axis to the shaft 30 by means of the shaft element inserted inside the sleeve engagement recess 16.

As a result, the closure device according to the invention cannot, in any way, be disassembled without first acting on the locking mechanism 70 to bring the shaft engagement element 60 in the non-protruding position.

This guarantees the maximum safety of the closure device against any device tampering attempts of a thief.

A person skilled in the art, to satisfy contingent needs, may modify, adapt and replace elements of the embodiments of the device described above with other functionally equivalent, without departing from the scope of the following claims. Each of the features described as belonging to a possible embodiment can be achieved independently from the other embodiments described.

The means and the materials required to carry out the different functions described may be of different nature, without, because of this, departing from the scope of the invention.

Note also that the term "comprising" does not exclude other elements or steps, the term "a/an" or "one" does not exclude a plurality.

All of the features described herein may be combined in any combination, except combinations where at least some of such features are mutually exclusive, while the scope of protection is only defined by the appended claims.

## Claims

1. An anti-theft closure and immobilization device (1) for a bicycle comprising:
- an outer sleeve (10) defining a sleeve axis (M-M), opposite sleeve end openings (13, 14), a sleeve inner surface (15), a sleeve engagement recess (16) extending from said sleeve inner surface (15) towards outside of the outer sleeve (10);
- a shaft (30) defining a rotation axis (A-A) and a shaft outer surface (31), said shaft (30) being arranged coaxially to, and inside of said outer sleeve (10) so as to rotate with respect to said outer sleeve (10) about said rotation axis (A-A), said shaft (30) having a first free shaft end (32) and a second free shaft end (33) accessible from said opposite sleeve end openings (13, 14); said shaft (30) having a second free end opening (35) and an inner cavity (34) extending along the rotation axis (A-A) from said second free end opening (35) towards the first free shaft end (32), said inner cavity (34) defining a cavity side surface (36); said shaft (30) having a through engagement hole (37) extending between said cavity side surface (36) and said shaft outer surface (31) along an engagement hole axis (F-F);
- a locking mechanism (70) arranged inside said inner cavity (34) and actuatable through said second free end opening (35), comprising a shaft engagement element (60) slidably engaged in said engagement hole (37) between a protruding position with respect to said shaft outer surface (31) and a non-protruding position with respect to said shaft outer surface (31);
- said sleeve engagement recess (16) and said shaft engagement element (60) being mutually positioned so as to align, at a predetermined angular position of the shaft (30) with respect to the outer sleeve (10), the shaft engagement element (60) with the sleeve engagement recess (16), so that the shaft engagement element (60) may be partially received in said sleeve engagement recess (16), in said predetermined angular position of the shaft, thus preventing any further movement of the shaft (30) with respect to the outer sleeve (10);
the anti-theft closure and immobilization device (1) being **characterized in that**:
- the outer sleeve (10) comprising a first sleeve element (11) comprising said sleeve engagement recess (16), and a second sleeve element (12), associable each other when approaching each other to form the outer sleeve (10); and **in that**
- the first sleeve element (11) comprises a first outer fastening portion (17) adapted to be fastened to a bicycle frame, and the second sleeve element (12) comprises a second outer fastening portion (18) adapted to be fastened to the bicycle frame.

2. A device, according to claim 1, wherein the locking mechanism (70) comprises:
- a stem (50) housed inside said inner cavity (34) and movable between a retracted position and an advanced position;
- motion transmitting means (70') between the stem (50) and the shaft engagement element (60) arranged within the inner cavity (34) and configured so that a movement of the stem (50) between the retracted position and the advanced position corresponds to a movement of the shaft engagement element (60) between the protruding position and the non-protruding position.

3. A device according to claim 1 or 2, wherein the motion transmitting means (70') comprise a cam-follower device (71).

4. A device according to claim 3, wherein the cam-follower device (71) comprises a cam profile (72, 73, 74) of the stem, a follower profile (61) of the shaft engagement element (60) adapted to be pushed in sliding contact against the cam profile (72, 73, 74), and elastic thrust means (63) adapted to push the follower profile (61) against the cam profile (72, 73, 74).

5. A device according to at least one of the preceding claims, comprising an actuation device (80) mounted inside said cavity (34) configured to actuate the locking mechanism (70) to move the shaft engagement element (60) between the protruding position and the non-protruding position and hold it in one of these positions.

6. A device according to claim 5, wherein the actuation device (80) comprises a lock for a key (81) accessible from said second free end opening (35).

7. A device according to at least one preceding claim, wherein the shaft (30) comprises a first shaft element (41) comprising the first free shaft end (32) and the engagement hole (37) of the shaft (30), and a second shaft element (42) comprising the second shaft end (33), said second shaft element (42) being fastenable to said first shaft element (41).

8. A device according to claim 1, comprising a first bearing (91) interposed between the first sleeve element (11) and the shaft (30), and a second bearing (92) interposed between the second sleeve element (12) and the shaft (30).

9. A device according to claim 7, wherein the second shaft element (42) comprises an axial securing element (27), integral with the second shaft element (42) and configured to prevent the axial sliding of the second outer sleeve element (12) with respect to the shaft (30) when moving away from the first rotating free shaft end (32).

10. A device according to claim 1, wherein the first fastening portion (17) and the second fastening portion (18) are configured to be fastened inside a pedal sprocket seat (101) of a bicycle frame (100) and wherein the first free shaft end (32) comprises a first pedals supporting portion (32') to engage and removably support a first pedal (102), and the second free shaft end (33) comprises a second pedals supporting portion (33') to engage and removably support a second pedal (103).

11. A bicycle comprising:
- a bicycle frame (100) having a frame portion comprising a pedal sprocket seat (101);
- a first pedal (102) and a second pedal (103);
- an anti-theft closure and immobilization device for a bicycle (1) according to at least one of the preceding claims, wherein the outer sleeve is housed inside, and fastened to said pedal sprocket seat (101);
- wherein the first pedal (102) is fastened to the first free shaft end (32), and wherein the second pedal (103) is fastened to the second free shaft end (33).

12. A device according to claim 1, wherein the first fastening portion (17) and the second fastening portion (18) are configured to be fastened inside a bicycle wheel hub seat and wherein the first free shaft end (32) comprises a first removable portion for mounting to a bicycle wheel fork, and the second free shaft end (33) comprises a second removable portion for mounting to a bicycle wheel fork.

## Patentansprüche

1. Diebstahlsichere Schließ- und Blockiervorrichtung (1) für ein Fahrrad, umfassend:
- eine äußere Hülse (10), welche eine Hülsenachse (M-M), entgegengesetzte Hülsenendöffnungen (13, 14), eine innere Hülsenfläche (15) und eine Hülseneingriffsaussparung (16) definiert, welche sich von der inneren Hülsenfläche (15) in Richtung außerhalb der äußeren Hülse (10) erstreckt;
- eine Welle (30), welche eine Drehachse (A-A) und eine äußere Wellenfläche (31) definiert, wobei die Welle (30) derart koaxial zu und innerhalb der äußeren Hülse (10) angeordnet ist, dass sie sich in Bezug auf die äußere Hülse (10) um die Drehachse (A-A) dreht, wobei die Welle (30) ein erstes freies Wellenende (32) und ein zweites freies Wellenende (33) aufweist, welche von den entgegengesetzten Hülsenendöffnungen (13, 14) erreichbar sind; wobei die Welle (30) eine Öffnung (35) des zweiten freien Endes und einen inneren Hohlraum (34) aufweist, welcher sich entlang der Drehachse (A-A) von der Öffnung (35) des zweiten freien Endes in Richtung des ersten freien Wellenendes (32) erstreckt, wobei der innere Hohlraum (34) eine Hohlraumseitenfläche (36) definiert; wobei die Welle (30) ein Durchgangseingriffsloch (37) aufweist, welches sich zwischen der Hohlraumseitenfläche (36) und der äußeren Wellenfläche (31) entlang einer Eingriffslochachse (F-F) erstreckt;
- einen Verriegelungsmechanismus (70), welcher innerhalb des inneren Hohlraums (34) angeordnet ist und durch die Öffnung (35) des zweiten freien Endes betätigbar ist, umfassend ein Welleneingriffselement (60), welches verschiebbar in dem Eingriffsloch (37) in Eingriff gebracht ist, zwischen einer vorstehenden Position in Bezug auf die äußere Wellenfläche (31) und einer nicht vorstehenden Position in Bezug auf die äußere Wellenfläche (31);
- wobei die Hülseneingriffsaussparung (16) und das Welleneingriffselement (60) derart zueinander positioniert sind, dass in einer vorbestimmten Winkelposition der Welle (30) in Bezug auf die äußere Hülse (10) das Welleneingriffselement (60) mit der Hülseneingriffsaussparung (16) ausgerichtet ist, so dass in der vorbestimmten Winkelposition der Welle das Welleneingriffselement (60) teilweise in der Hülseneingriffsaussparung (16) aufgenommen sein kann, wodurch jegliche weitere Bewegung der Welle (30) in Bezug auf die äußere Hülse (10) verhindert wird;
wobei die diebstahlsichere Schließ- und Blockiervorrichtung (1) **dadurch gekennzeichnet ist, dass**
- die äußere Hülse (10) ein erstes Hülsenelement (11), welches die Hülseneingriffsaussparung (16) umfasst, und ein zweites Hülsenelement (12) umfasst, welche einander zuordenbar sind, wenn sie sich einander annähern, um die äußere Hülse (10) zu bilden; und dass
- das erste Hülsenelement (11) einen ersten äußeren Befestigungsabschnitt (17) umfasst, welcher dazu eingerichtet ist, an einem Fahrradrahmen befestigt zu sein, und das zweite Hülsenelement (12) einen zweiten äußeren Befestigungsabschnitt (18) umfasst, welcher dazu eingerichtet ist, an dem Fahrradrahmen befestigt zu sein.

2. Vorrichtung nach Anspruch 1, wobei der Verriegelungsmechanismus (70) umfasst:
- einen Schaft (50), welcher innerhalb des inneren Hohlraums (34) untergebracht ist und zwischen einer eingezogenen Position und einer ausgefahrenen Position beweglich ist;
- Bewegungsübertragungsmittel (70') zwischen dem Schaft (50) und dem Welleneingriffselement (60), welche innerhalb des inneren Hohlraums (34) angeordnet sind und derart eingerichtet sind, dass eine Bewegung des Schafts (50) zwischen der eingezogenen Position und der ausgefahrenen Position einer Bewegung des Welleneingriffselements (60) zwischen der vorstehenden Position und der nicht vorstehenden Position entspricht.

3. Vorrichtung nach Anspruch 1 oder 2, wobei die Bewegungsübertragungsmittel (70') eine Nockenfolgervorrichtung (71) umfassen.

4. Vorrichtung nach Anspruch 3, wobei die Nockenfolgervorrichtung (71) ein Nockenprofil (72, 73, 74) des Schafts, ein Folgerprofil (61) des Welleneingriffselements (60), welches dazu eingerichtet ist, in Gleitkontakt gegen das Nockenprofil (72, 73, 74) gedrückt zu werden, und elastische Schubmittel (63) umfasst, welche dazu eingerichtet sind, das Folgerprofil (61) gegen das Nockenprofil (72, 73, 74) zu drücken.

5. Vorrichtung nach wenigstens einem der vorhergehenden Ansprüche, umfassend eine innerhalb des Hohlraums (34) montierte Betätigungsvorrichtung (80), welche dazu eingerichtet ist, den Verriegelungsmechanismus (70) zu betätigen, um das Welleneingriffselement (60) zwischen der vorstehenden Position und der nicht vorstehenden Position zu bewegen und es in einer dieser Positionen zu halten.

6. Vorrichtung nach Anspruch 5, wobei die Betätigungsvorrichtung (80) ein Schloss für einen Schlüssel (81) umfasst, welches von der Öffnung (35) des zweiten freien Endes erreichbar ist.

7. Vorrichtung nach wenigstens einem vorhergehenden Anspruch, wobei die Welle (30) ein erstes Wellenelement (41), welches das erste freie Wellenende (32) und das Eingriffsloch (37) der Welle (30) umfasst, und ein zweites Wellenelement (42) umfasst, welches das zweite Wellenende (33) umfasst, wobei das zweite Wellenelement (42) an dem ersten Wellenelement (41) befestigbar ist.

8. Vorrichtung nach Anspruch 1, umfassend ein erstes Lager (91), welches zwischen dem ersten Hülsenelement (11) und der Welle (30) eingefügt ist, und ein zweites Lager (92), welches zwischen dem zweiten Hülsenelement (12) und der Welle (30) eingefügt ist.

9. Vorrichtung nach Anspruch 7, wobei das zweite Wellenelement (42) ein axiales Sicherungselement (27) umfasst, welches integral mit dem zweiten Wellenelement (42) vorliegt und dazu eingerichtet ist, die axiale Verschiebung des zweiten äußeren Hülsenelements (12) in Bezug auf die Welle (30) zu verhindern, wenn es sich weg von dem ersten sich drehenden freien Wellenende (32) bewegt.

10. Vorrichtung nach Anspruch 1, wobei der erste Befestigungsabschnitt (17) und der zweite Befestigungsabschnitt (18) dazu eingerichtet sind, innerhalb eines Pedalkettenradsitzes (101) eines Fahrradrahmens (100) befestigt zu sein, und wobei das erste freie Wellenende (32) einen ersten Pedalhalterungsabschnitt (32') umfasst, um ein erstes Pedal (102) in Eingriff zu nehmen und abnehmbar zu haltern, und das zweite freie Wellenende (33) einen zweiten Pedalhalterungsabschnitt (33') umfasst, um ein zweites Pedal (103) in Eingriff zu nehmen und abnehmbar zu haltern.

11. Fahrrad, umfassend:
- einen Fahrradrahmen (100), welcher einen Rahmenabschnitt aufweist, der einen Pedalkettenradsitz (101) umfasst;
- ein erstes Pedal (102) und ein zweites Pedal (103);
- eine diebstahlsichere Schließ- und Blockiervorrichtung (1) für ein Fahrrad nach wenigstens einem der vorhergehenden Ansprüche, wobei die äußere Hülse innerhalb des Pedalkettenradsitzes (101) untergebracht und daran befestigt ist;
- wobei das erste Pedal (102) an dem ersten freien Wellenende (32) befestigt ist und wobei das zweite Pedal (103) an dem zweiten freien Wellenende (33) befestigt ist.

12. Vorrichtung nach Anspruch 1, wobei der erste Befestigungsabschnitt (17) und der zweite Befestigungsabschnitt (18) dazu eingerichtet sind, innerhalb eines Radnabensitzes des Fahrrads befestigt zu sein, und wobei das erste freie Wellenende (32) einen ersten abnehmbaren Abschnitt zur Montage an einer Radgabel des Fahrrads umfasst und das zweite freie Wellenende (33) einen zweiten abnehmbaren Abschnitt zur Montage an einer Radgabel des Fahrrads umfasst.

## Revendications

1. Dispositif de fermeture antivol et d'immobilisation (1) pour une bicyclette comprenant :
- une gaine extérieure (10) définissant un axe de gaine (M-M), des ouvertures d'extrémités de gaine opposées (13, 14), une surface intérieure de gaine (15), un évidement de mise en prise de gaine (16) s'étendant à partir de ladite surface intérieure de gaine (15) vers l'extérieur de la gaine extérieure (10) ;
- un arbre (30) définissant un axe de rotation (A-A) et une surface extérieure d'arbre (31), ledit arbre (30) étant agencé de manière coaxiale par rapport à, et dans ladite gaine extérieure (10) de manière à tourner par rapport à ladite gaine extérieure (10) autour dudit axe de rotation (A-A), ledit arbre (30) ayant une première extrémité d'arbre libre (32) et une seconde extrémité d'arbre libre (33) accessibles à partir desdites ouvertures d'extrémités de gaine opposées (13, 14) ; ledit arbre (30) ayant une seconde ouverture d'extrémité libre (35) et une cavité intérieure (34) s'étendant le long de l'axe de rotation (A-A) à partir de ladite seconde ouverture d'extrémité libre (35) vers la première extrémité d'arbre libre (32), ladite cavité intérieure (34) définissant une surface de côté de cavité (36) ; ledit arbre (30) ayant un trou de mise en prise (37) traversant s'étendant entre ladite surface de côté de cavité (36) et ladite surface extérieure d'arbre (31) le long d'un axe de trou de mise en prise (F-F) ;
- un mécanisme de fermeture (70) agencé dans ladite cavité intérieure (34) et actionnable à travers ladite seconde ouverture d'extrémité libre (35), comprenant un élément de mise en prise d'arbre (60) mis en prise de manière coulissante dans ledit trou de mise en prise (37) entre une position saillante par rapport à ladite surface extérieure d'arbre (31) et une position non saillante par rapport à ladite surface extérieure d'arbre (31) ;
- ledit évidement de mise en prise de gaine (16) et ledit élément de mise en prise d'arbre (60) étant mutuellement positionnés de manière à aligner, à une position angulaire prédéterminée de l'arbre (30) par rapport à la gaine extérieure (10), l'élément de mise en prise d'arbre (60) sur l'évidement de mise en prise de gaine (16), de sorte que l'élément de mise en prise d'arbre (60) puisse être partiellement reçu dans ledit évidement de mise en prise de gaine (16), dans ladite position angulaire prédéterminée de l'arbre, empêchant ainsi tout mouvement supplémentaire de l'arbre (30) par rapport à la gaine extérieure (10) ;
le dispositif de fermeture antivol et d'immobilisation (1) étant **caractérisé en ce que** :
- la gaine extérieure (10) comprenant un premier élément de gaine (11) comprenant ledit évidement de mise en prise de gaine (16), et un second élément de gaine (12), associables l'un à l'autre lorsqu'ils s'approchent l'un de l'autre pour former la gaine extérieure (10) ; et **en ce que**
- le premier élément de gaine (11) comprend une première partie de fixation (17) extérieure adaptée pour être fixée à un cadre de bicyclette, et le second élément de gaine (12) comprend une seconde partie de fixation (18) extérieure adaptée pour être fixée au cadre de bicyclette.

2. Dispositif, selon la revendication 1, dans lequel le mécanisme de fermeture (70) comprend :
- une tige (50) logée dans ladite cavité intérieure (34) et mobile entre une position rétractée et une position avancée ;
- des moyens de transmission de déplacement (70') entre la tige (50) et l'élément de mise en prise d'arbre (60) agencés dans la cavité intérieure (34) et configurés de sorte qu'un mouvement de la tige (50) entre la position rétractée et la position avancée corresponde à un mouvement de l'élément de mise en prise d'arbre (60) entre la position saillante et la position non saillante.

3. Dispositif selon la revendication 1 ou 2, dans lequel les moyens de transmission de déplacement (70') comprennent un dispositif basculeur (71).

4. Dispositif selon la revendication 3, dans lequel le dispositif basculeur (71) comprend un profil de came (72, 73, 74) de la tige, un profil de suiveur (61) de l'élément de mise en prise d'arbre (60) adapté pour être poussé en contact coulissant contre le profil de came (72, 73, 74), et des moyens de poussée élastique (63) adaptés pour pousser le profil de suiveur (61) contre le profil de came (72, 73, 74).

5. Dispositif selon au moins une des revendications précédentes, comprenant un dispositif d'actionnement (80) monté dans ladite cavité (34) configuré pour actionner le mécanisme de fermeture (70) pour déplacer l'élément de mise en prise d'arbre (60) entre la position saillante et la position non saillante et le maintenir dans l'une de ces positions.

6. Dispositif selon la revendication 5, dans lequel le dispositif d'actionnement (80) comprend une serrure pour une clé (81) accessible à partir de ladite seconde ouverture d'extrémité libre (35).

7. Dispositif selon au moins une revendication précédente, dans lequel l'arbre (30) comprend un premier élément d'arbre (41) comprenant la première extrémité d'arbre libre (32) et le trou de mise en prise (37) de l'arbre (30), et un second élément d'arbre (42) comprenant la seconde extrémité d'arbre (33), ledit second élément d'arbre (42) étant fixable audit premier élément d'arbre (41).

8. Dispositif selon la revendication 1, comprenant un premier palier (91) interposé entre le premier élément de gaine (11) et l'arbre (30), et un second palier (92) interposé entre le second élément de gaine (12) et l'arbre (30).

9. Dispositif selon la revendication 7, dans lequel le second élément d'arbre (42) comprend un élément d'attache axial (27), d'un seul bloc avec le second élément d'arbre (42) et configuré pour empêcher le coulissement axial du second élément de gaine (12) extérieure par rapport à l'arbre (30) lors d'un éloignement à partir de la première extrémité d'arbre libre (32) tournante.

10. Dispositif selon la revendication 1, dans lequel la première partie de fixation (17) et la seconde partie de fixation (18) sont configurées pour être fixées dans un siège de pignon de pédale (101) d'un cadre de bicyclette (100) et dans lequel la première extrémité d'arbre libre (32) comprend une première partie de support de pédales (32') pour mettre en prise et supporter de manière amovible une première pédale (102), et la seconde extrémité d'arbre libre (33) comprend une seconde partie de support de pédales (33') pour mettre en prise et supporter de manière amovible une seconde pédale (103).

11. Bicyclette comprenant :
- un cadre de bicyclette (100) ayant une partie de cadre comprenant un siège de pignon de pédale (101) ;
- une première pédale (102) et une seconde pédale (103) ;
- un dispositif de fermeture antivol et d'immobilisation pour une bicyclette (1) selon au moins une des revendications précédentes, dans laquelle la gaine extérieure est logée dans, et fixée audit siège de pignon de pédale (101) ;
- dans laquelle la première pédale (102) est fixée à la première extrémité d'arbre libre (32), et dans laquelle la seconde pédale (103) est fixée à la seconde extrémité d'arbre libre (33).

12. Dispositif selon la revendication 1, dans lequel la première partie de fixation (17) et la seconde partie de fixation (18) sont configurées pour être fixées dans un porte-moyeu de roue de bicyclette et dans lequel la première extrémité d'arbre libre (32) comprend une première partie amovible pour un montage sur une chape de roue de bicyclette, et la seconde extrémité d'arbre libre (33) comprend une seconde partie amovible pour un montage sur une chape de roue de bicyclette.
